# EUROPÄISCHE PATENTANMELDUNG

(11) **EP 4 840 292 A1**
(43) Veröffentlichungstag der Anmeldung: **18.11.2026**
(21) Anmeldenummer: 26177014.3
(22) Anmeldetag: 06.05.2026
(51) Int. Cl.: A01D 89/00

(54) **LANDWIRTSCHAFTLICHE ERNTEMASCHINE MIT PICKUP**

(30) Priorität: 15.05.2025 DE 102025118921
(71) Anmelder: Maschinenfabrik Bernard Krone GmbH & Co. KG, 48480 Spelle (DE)
(72) Erfinder: van Bassen, Tobias, 49832 Andervenne (DE); Dresselhaus, Christian, 48480 Spelle (DE)

(57) **Zusammenfassung**

Landwirtschaftliche Erntemaschine mit einem Hauptrahmen und mit einer schwenkbar am Hauptrahmen angelenkten Pickup, welche einen rotierend antreibbaren Zinkenrotor mit Aufnahmezinken zum Aufnehmen von auf einem Boden befindlichem Erntegut umfasst, mit einer dem Zinkenrotor zugeordneten Niederhaltereinrichtung, welche zusammen mit dem Zinkenrotor einen Erntegutkanal zur Weitergabe des aufgenommenen Erntegutes an nachfolgende Förderaggregate ausbildet, sowie mit einer Verstelleinrichtung zur höhenbeweglichen Verstellung des Zinkenrotors relativ zum Hauptrahmen, wobei die Verstelleinrichtung weiterhin dazu eingerichtet ist, eine Mindest-Arbeitshöhe der Niederhaltereinrichtung in Bezug zum Boden einzustellen und diese eingestellte Mindest-Arbeitshöhe unabhängig von einer Höhenposition des Zinkenrotors der Pickup in Bezug auf den Hauptrahmen zumindest annähernd konstant zu halten.

## Beschreibung

Die vorliegende Erfindung betrifft eine landwirtschaftliche Erntemaschine nach dem Oberbegriff des Anspruchs 1.

Landwirtschaftliches Erntegut, wie Gras oder Stroh, wird beim Ernteprozess oftmals vom Wurzelstock abgeschnitten und anschließend zum Anwelken oder Trocknen auf dem Boden belassen, um zu einem späteren Zeitpunkt zu Schwaden geformt und geerntet zu werden. Für die Ernte weisen landwirtschaftliche Erntemaschinen oftmals eine sogenannte Pickup auf, welche das Erntegut vom Boden aufnehmen kann. Eine solche Pickup ist eine Aufnahmevorrichtung, die typischerweise einen quer zur Fahrtrichtung sich erstreckenden Zinkenrotor umfasst, der rotierend antreibbar ist und mit radial nach außen ragenden Zinken bestückt ist. Im Feldbetrieb fährt die Erntemaschine über das Feld, wobei der Zinkenrotor der Pickup in einem kleinen Abstand über den Boden geführt wird. Dabei wird der Zinkenrotor rotierend angetrieben, sodass die Zinken das Erntegut vom Boden aufgreifen und an weiteren, der Pickup nachgeordneten Förder- und/oder Verarbeitungseinrichtungen der Erntemaschine weiterfördern können. In der Regel ist die Pickup höhenbeweglich gegenüber einem Hauptrahmen der Erntemaschine angeordnet und weist Tasträder auf, welche die Pickup über den Boden führen und eine gleichbleibende Höhe der Zinken des Zinkenrotors gegenüber dem Boden sicherstellen. Um hohe Erntegutmengen sicher aufnehmen und fördern zu können, weisen moderne Pickups eine Niederhaltereinrichtung auf, die das von dem schnell rotierenden Zinkenrotor aufgenommene Erntegut in Richtung der nachfolgenden Förder- und/oder Verarbeitungseinrichtungen führt.

Damit die Niederhaltereinrichtung auch bei ungleichmäßigem, dicker oder dünner werdendem Erntegutstrom das Erntegut führen kann, wird die Niederhaltereinrichtung üblicherweise derart aufgehängt, dass sich ein Abstand zwischen Zinkenrotor und Niederhaltereinrichtung und/oder zwischen Boden und Niederhaltereinrichtung an eine Dicke des aufzunehmenden Erntegutstroms anpassen kann. Der Abstand der Niederhaltereinrichtung zum Boden wird im Allgemeinen auch Arbeitshöhe genannt. Die Arbeitshöhe ist entscheidend für ein homogenes und störungsfreies Fördern des Ernteguts. Bei zu niedriger Arbeitshöhe kann nicht das gesamte Erntegut aufgenommen werden, etwa wenn die Niederhaltereinrichtung in das Erntegut eintaucht und vor sich her schiebt. Bei zu hoher Arbeitshöhe kann es zu einem Abriss des Erntegutstroms kommen, etwa wenn das Erntegut nicht einer Umlaufbahn der Aufnahmezinken folgt, sondern unkontrolliert vom Boden hochgeschleudert wird. Im Allgemeinen kommt es durch herunterfallendem oder aufgeschobenem und anschließend wieder aufgenommenem Erntegut zu einer ungleichmäßigen Erntegutaufnahme, die dann zu Verstopfungen und Überbelastungen an der Pickup oder den nachfolgenden Förder- und/oder Verarbeitungseinrichtungen führen kann.

Im Stand der Technik ist es bekannt, die Niederhaltereinrichtung am Hauptrahmen der Erntemaschine mittels einer Kette, einem Band oder dgl. aufzuhängen. Eine Höheneinstellung der Niederhaltereinrichtung durch Aushängen und Wiedereinhängen eines Kettengliedes der Kette oder einer Öse des Bandes ist jedoch sehr mühsam und zeitaufwändig durchführbar.

Die Druckschrift EP 2 765 848 B1 schlägt daher vor, eine Seilwinde für die Einstellung der Arbeitshöhe zu verwenden. Dadurch kann die Einstellung der Arbeitshöhe zwar einfacher ausgeführt werden, jedoch bleibt ein grundlegendes Problem ungelöst. Eine am Hauptrahmen aufgehängte Niederhaltereinrichtung hat keinen direkten Bezug zur Höhenbeweglichkeit der Pickup gegenüber dem Boden. Folgt die Pickup einer Bodenkontur, wie etwa einer Senke, kann die Niederhaltereinrichtung der Pickup nicht folgen. Dadurch ändert sich zwangsweise die Arbeitshöhe der Niederhaltereinrichtung bzw. der Abstand der Niederhaltereinrichtung zum Zinkenrotor, wodurch wiederum eine kontinuierliche und gleichbleibende Erntegutaufnahme nicht sichergestellt ist.

Aufgabe der Erfindung ist es, eine Niederhaltereinrichtung für eine Pickup einer Erntemaschine bereitzustellen, welche eine verbesserte Erntegutaufnahme und somit eine gleichbleibende, homogene Förderung des Erntegutes an die der Pickup nachfolgenden Bearbeitungsorgane sicherstellt.

Zur Lösung der Aufgabe wird eine landwirtschaftliche Erntemaschine mit einem Hauptrahmen und mit einer schwenkbar am Hauptrahmen angelenkten Pickup bereitgestellt, welche einen rotierend antreibbaren Zinkenrotor mit Aufnahmezinken zum Aufnehmen von auf einem Boden befindlichem Erntegut umfasst, mit einer dem Zinkenrotor zugeordneten Niederhaltereinrichtung, welche zusammen mit dem Zinkenrotor einen Erntegutkanal zur Weitergabe des aufgenommenen Erntegutes an nachfolgende Förderaggregate ausbildet, sowie mit einer Verstelleinrichtung zur höhenbeweglichen Verstellung des Zinkenrotors relativ zum Hauptrahmen, wobei die Verstelleinrichtung weiterhin dazu eingerichtet ist, eine Mindest-Arbeitshöhe der Niederhaltereinrichtung in Bezug zum Boden einzustellen und diese eingestellte Mindest-Arbeitshöhe unabhängig von einer Höhenposition des Zinkenrotors der Pickup in Bezug auf den Hauptrahmen zumindest annähernd konstant zu halten.

Bei der landwirtschaftlichen Erntemaschine kann es sich um eine beliebige Erntemaschine mit einer Pickup zum Aufnehmen von Erntegut vom Boden handeln, beispielsweise eine Ballenpresse, einen Ladewagen, einen Bandschwader oder einen Feldhäcksler. Der Hauptrahmen der Erntemaschine bildet die tragende Struktur der Erntemaschine. Er dient dazu, die jeweiligen Bearbeitungsorgane zu tragen und zu stützen. Der Hauptrahmen kann dabei ein Fahrgestell aufweisen, das die Erntemaschine gegenüber dem Boden abstützt.

In einem Feldbetriebsmodus bewegt sich die Erntemaschine in einer Fahrtrichtung über das Feld, bzw. über das auf dem Feld befindliche Erntegut. Das Erntegut liegt dabei zumeist in Form eines Schwades auf dem Boden. Insbesondere handelt es sich um halmartiges Erntegut, wie Heu, Stroh oder angewelktes Grüngut. Die Pickup ist zur Aufnahme von dem am Boden liegenden Erntegut vorgesehen. Dafür weist sie einen Zinkenrotor auf. Im Feldbetriebsmodus wird der Zinkenrotor in Fahrtrichtung über den Boden geführt und rotierend angetrieben. Die Aufnahmezinken sind dazu vorgesehen, das Erntegut aufzuheben und an stromabwärts angeordnete Bearbeitungsorgane der Erntemaschine weiterzugeben.

Der Zinkenrotor kann sich insbesondere quer zur Fahrtrichtung erstrecken. An seinem Umfang weist er die nach außen ragenden Aufnahmezinken auf. Diese sind in der Regel an seinem Umfang gleichmäßig verteilt angeordnet.

Der Zinkenrotor ist höhenbeweglich verstellbar am Hauptrahmen der Erntemaschine angebracht. Durch diese Höhenbeweglichkeit kann sich der Zinkenrotor an unterschiedliche Bodenkonturen anpassen und kann über diese geführt werden. Eine solche Bodenführung gewährleistet, dass die Pickup auch auf unebenem Gelände zuverlässig arbeitet. Eine exakte Bodenführung des Zinkenrotors der Pickup ist zur Vermeidung einer Erntegutverschmutzung, beispielsweise durch ein Einstechen der Aufnahmezinken des Zinkenrotors in den Boden von entscheidender Bedeutung. Zur Bodenführung kann die Pickup übliche Tastmittel wie Tasträder und/oder Kufen aufweisen.

Die Höhenbeweglichkeit der Pickup kann in unterschiedlichen Ausführungsformen realisiert sein. In vorteilhafter Ausgestaltung ist der Zinkenrotor der Pickup um eine Pickup-Schwenkachse schwenkbar am Rahmen der Erntemaschine gelagert. Die Pickup kann ein oder mehrere Schwenkarme aufweisen, um den Zinkenrotor zu verschwenken. Die Pickup-Schwenkachse kann sich dabei in die Querrichtung erstrecken.

Die Höhenbeweglichkeit des Zinkenrotors der Pickup wird allerdings nicht nur für eine veränderliche Bodenführung verwendet. Vielmehr kann sie auch dafür genutzt werden, eine für den Straßentransport vorgesehene ausgehobene Transportposition der Pickup einzustellen. Die Verstelleinrichtung ist dabei dazu vorgesehen, die jeweiligen Höhenpositionen des Zinkenrotors der Pickup gegenüber dem Rahmen bzw. dem Boden zu steuern und/oder zumindest zu führen.

Die Niederhaltereinrichtung ist dazu vorgesehen, zusammen mit den Aufnahmezinken des Zinkenrotors einen Erntegutkanal auszubilden, der einen gleichbleibenden und homogenen Erntegutfluss sowohl bei der Aufnahme des Erntegutes vom Boden als auch bei der Weiterförderung an nachfolgende Bearbeitungsorgane sicherstellt. Dazu ist es von besonderer Bedeutung, dass die Niederhaltereinrichtung einerseits in einem Bereich vor der Pickup mit einer einstellbaren Mindestarbeitshöhe zum Boden auf den aufzunehmenden Schwad einwirkt und andererseits den Durchgang im Erntegutkanal zwischen der Niederhaltereinrichtung und dem Zinkenrotor der Pickup so gestaltet, dass eine verstopfungsfreie Weiterförderung an nachfolgende Bearbeitungsorgane erreichbar ist. Für die Bemessung einer vorteilhaften Mindestarbeitshöhe der Niederhaltereinrichtung im Bereich vor der Pickup ist es wichtig, dass die Niederhaltereinrichtung während der Aufnahme des Erntegutes vom Boden verdichtend auf den aufzunehmenden Schwad einwirkt und dabei den Schwad jedoch nicht vor sich herschiebt. Diese leichte Druckwirkung sorgt für eine begrenzte Vorverdichtung des Schwades bereits bei der Aufnahme des Erntegutes vom Boden durch die Aufnahmezinken des Zinkenrotors und bildet somit eine homogene Erntegutmatte, die sich vorteilhaft zur gleichbleibenden und verstopfungsfreien Weiterförderung an nachfolgende Bearbeitungsorgane eignet.

In einer vorteilhaften Ausgestaltung umfasst die Niederhaltereinrichtung eine Niederhalterrolle. Diese ist in einer Fahrtrichtung vor und/oder oberhalb des Zinkenrotors der Pickup angeordnet. Eine solche Niederhalterrolle hat den Vorteil, dass diese sich bei der Vorverdichtung des aufzunehmenden Schwades auf dem Schwad abrollen kann und somit ein Aufschieben des Erntegutes verhindert. Zur Begünstigung dieses Effektes kann die Niederhalterrolle zusätzlich drehbar gelagert und/oder rotierend antreibbar sein. Optimalerweise erstreckt sich die Niederhalterrolle in die Querrichtung über eine gesamte Breite des Zinkenrotors hinweg.

Die Erntemaschine zeichnet sich dadurch aus, dass sie eine Verstelleinrichtung aufweist, die dazu eingerichtet ist, eine Mindest-Arbeitshöhe der Niederhaltereinrichtung einzustellen und die eingestellte Mindest-Arbeitshöhe unabhängig von der Höhenposition des Zinkenrotors in Bezug auf den Hauptrahmen zumindest annähernd konstant zu halten.

Der Verstelleinrichtung kommt somit eine Doppelfunktion zu. So ist sie sowohl für die Verstellung des Zinkenrotors als auch der Niederhaltereinrichtung vorgesehen. Durch die Verstelleinrichtung wird zudem eine Aufhängung für die Niederhaltereinrichtung bereitgestellt, die gleich zwei Vorteile gegenüber dem Stand der Technik bietet. Zum einen kann die Arbeitshöhe der Niederhaltereinrichtung gegenüber dem Boden mittels der Verstelleinrichtung eingestellt werden. Gegenüber herkömmlichen Erntemaschinen, bei denen die Niederhaltereinrichtungen mittels eines Haltemittels wie einer Kette oder einem Band direkt am Hauptrahmen aufgehängt und die Mindest-Arbeitshöhe einzig durch eine Länge des Haltemittels definiert ist, kann die Arbeitshöhe direkt durch die Verstelleinrichtung eingestellt werden, an der die Niederhaltereinrichtung aufgehängt ist.

Die Mindest-Arbeitshöhe der Niederhaltereinrichtung ist durch die Verstelleinrichtung nicht nur einstellbar, sondern wird beim Überfahren von Bodenunebenheiten auch zumindest annähernd konstant gehalten. Da die Niederhaltereinrichtung nicht am Hauptrahmen sondern an Seitenwänden der Pickup angelenkt ist, wird sie auch nicht in einer festen Lage gegenüber dem Hauptrahmen gehalten, sondern kann sich relativ zum Hauptrahmen höhenbeweglich verstellen. Man kann auch sagen, dass die Niederhaltereinrichtung in nahezu gleichbleibender Arbeitshöhe über den Boden geführt wird. Diese automatische Anpassung an Bodenkonturen erfolgt abhängig von der Höhenposition des Zinkenrotors. Das bedeutet, dass die Arbeitshöhe der Niederhaltereinrichtung dann wenn der Zinkenrotor beispielsweise eine Bodensenke durchfährt, auch gesteuert durch den Zinkenrotor entsprechend reduziert wird. Durch die Verstelleinrichtung bleibt die Arbeitshöhe der Niederhaltereinrichtung definiert als eine vom Boden senkrecht gemessene Distanz zur Niederhaltereinrichtung immer annähernd gleich.

Es wird dabei die "Mindest-Arbeitshöhe", d.h. ein Mindestmaß für die Arbeitshöhe, eingestellt. Das bedeutet, dass die Niederhaltereinrichtung im Betrieb auch größere Arbeitshöhen einnehmen kann. Insofern wird durch die Aufhängung an der Verstelleinrichtung die Arbeitshöhe nach oben hin nicht eingeschränkt. Vorteilhaft kann die Niederhaltereinrichtung daher auch eine größere Arbeitshöhe aufweisen, wenn dies beispielsweise aufgrund hoher Erntegutmengen erforderlich sein sollte. Diese Anpassung an größere Erntegutmengen kann insbesondere auch selbsttätig erfolgen. Arbeitshöhe und Mindest-Arbeitshöhe werden im Folgenden synonym verwendet, wenn diese auf die Niederhaltereinrichtung bezogen sind.

Angemerkt sei auch, dass die Niederhaltereinrichtung außerhalb des Feldbetriebsmodus gänzlich andere Höhen gegenüber dem Boden annehmen kann, beispielsweise wenn der Zinkenrotor für den Straßentransport in die Transportposition angehoben ist.

Die Verstelleinrichtung ist gleichermaßen für Höhenbewegungen des Zinkenrotors als auch der Niederhaltereinrichtung vorgesehen. Die Höhenbewegungen der Niederhaltereinrichtung haben dabei einen direkten Bezug zu den Höhenbewegungen des Zinkenrotors. Das bedeutet, dass die Niederhaltereinrichtung und der Zinkenrotor gleichermaßen den Bodenkonturen folgen. Wenn der Zinkenrotor sich beispielsweise aufgrund einer Bodensenke relativ zum Hauptrahmen nach unten bewegt, wird die Niederhaltereinrichtung ebenfalls nach unten bewegt. Insofern kann es auch nicht zu einem Abriss des Erntegutstroms kommen. Die Niederhaltereinrichtung sticht auch nicht in das Erntegut ein, wie dies bei herkömmlichen Erntemaschinen der Fall ist. Beim Überfahren von Bodenerhöhungen wiederum treten weniger Verstopfungen und Überlastungen auf, da sich die Niederhaltereinrichtung nach oben bewegt und nicht in höher gelegenes Erntegut eintaucht.

Dadurch dass die Niederhaltereinrichtung an der Verstelleinrichtung für den Zinkenrotor aufgehängt ist, kann sie einer Höhenposition der Tastmittel direkt folgen. Man kann auch sagen, dass die Niederhaltereinrichtung aufgrund dieser direkten Anbringung Bodenkonturen direkter und schneller folgen kann, als dies herkömmlicherweise der Fall ist.

Durch die Einstellung der Arbeitshöhe der Niederhaltereinrichtung ist auch eine Durchlassweite des Erntegutkanals veränderbar. Die Durchlassweite ist durch einen Abstand zwischen dem Zinkenrotor der Pickup und der Niederhaltereinrichtung definiert. Wie bei der Arbeitshöhe, kann die Einstellung der Durchlassweite zur Anpassung an unterschiedliche Erntegutmengen genutzt werden. Diese Anpassbarkeit dient auch vorteilhaft dazu, Verstopfungen im Durchlasskanal zu verhindern.

Bevorzugt weist die Verstelleinrichtung erfindungsgemäß einen Niederhalteraktor auf, der dazu eingerichtet ist, die Mindest-Arbeitshöhe einzustellen. Dank des Niederhalteraktors muss keine manuelle Verstellung mehr erfolgen. Der Niederhalteraktor kann durch eine Bedienerschnittstelle und/oder eine Steuerungseinrichtung steuerbar sein. Dadurch ist die Einstellung der Mindest-Arbeitshöhe vorteilhaft auch von einem Fahrersitz aus und/oder während des Betriebs der Erntemaschine einleitbar.

Der Niederhalteraktor kann unterschiedlich ausgeführt sein. Bevorzugt ist er ein Hydraulikzylinder. Er kann aber auch als ein Pneumatikzylinder und/oder als ein Linearantrieb ausgeführt sein. Ebenfalls möglich ist es, dass der Niederhalteraktor als ein Dreh- und/oder Schwenkmotor ausgebildet ist, wie beispielsweise ein elektrischer Servomotor.

Die Niederhaltereinrichtung ist bevorzugt über ein flexibles Haltemittel an einem Anlenkpunkt der Verstelleinrichtung oberhalb des Zinkenrotors aufgehängt. Das Haltemittel ist der Verstelleinrichtung zugeordnet. Es dient dazu, eine der Schwerkraft der Niederhaltereinrichtung entgegengerichtete Kraft aufzubringen. Die Flexibilität des Haltemittels bietet den Vorteil, dass die Mindest-Arbeitshöhe der Niederhaltereinrichtung zuverlässig garantiert werden kann, größere Arbeitshöhen von der Niederhaltereinrichtung jedoch ohne Verstellaufwand eingenommen werden können. Zur Bewegung der Niederhaltereinrichtung vom Zinkenrotor weg muss im Prinzip daher lediglich die Schwerkraft der Niederhaltereinrichtung überwunden werden. Das Gewicht der Niederhaltereinrichtung kann vorteilhaft so ausgelegt sein, dass sich die Niederhaltereinrichtung in Bezug auf eventuelle hohe Erntegutmengen selbsttätig anhebt und größere Arbeitshöhen zulässt. Je mehr Erntegut zwischen Zinkenrotor und Niederhaltereinrichtung gefördert wird, desto mehr steigt die Arbeitshöhe der Niederhaltereinrichtung an. Bei geringen Erntegutmengen verweilt die Niederhaltereinrichtung derweil in der von der Verstelleinrichtung eingestellten Mindest-Arbeitshöhe über dem Boden. Als flexibles Haltemittel kann beispielsweise eine Kette, ein Riemen, Band und/oder ein Seil verwendet werden.

Bei dem Anlenkpunkt handelt es sich nicht um einen "Punkt" im engeren Sinne. Vielmehr kann es sich bei dem Anlenkpunkt um eine Position an der Verstelleinrichtung handeln, an der das Haltemittel befestigt werden kann. Der Anlenkpunkt kann je nach Ausführungsart des Haltemittels und/oder der Verstelleinrichtung auch durch ein oder mehrere Bauteile und/oder Bauteilgeometrien realisiert sein. Der Anlenkpunkt ist insbesondere der Verstelleinrichtung zugeordnet und/oder an ihr angeordnet.

Je nach Ausführungsart gibt es unterschiedliche Möglichkeiten, das Haltemittel am Anlenkpunkt zu befestigen. So kann das Haltemittel festgeklemmt, festgeklebt und/oder angeschweißt sein. Auch kann das Haltemittel mittels eines Knotens befestigt sein. Insbesondere sind auch lösbare Befestigungsmittel wie Schrauben verwendbar, um das Haltemittel zu befestigen.

Vergleichbar dem Anlenkpunkt kann ein Befestigungspunkt zur Befestigung des Haltemittels an der Niederhaltereinrichtung vorgesehen sein. Der Befestigungspunkt ist der Niederhaltereinrichtung zugeordnet und/oder an dieser angeordnet. Dadurch kann das Haltemittel einerseits am Anlenkpunkt und andererseits am Befestigungspunkt befestigt werden. Analog zum Anlenkpunkt handelt es sich auch bei dem Befestigungspunkt nicht um einen "Punkt" im engeren Sinne. Die Befestigung des Haltemittels an der Niederhaltereinrichtung kann dabei gleichermaßen oder auch andersartig zur Befestigung am Anlenkpunkt ausgestaltet sein.

Grundsätzlich kann sich das Haltemittel vom Anlenkpunkt an der Verstelleinrichtung ausgehend in eine Erstreckungsrichtung ohne Umwege zur Niederhaltereinrichtung und/oder dem Befestigungspunkt an der Niederhaltereinrichtung hin erstrecken. Bevorzugt ist jedoch, dass die Verstelleinrichtung zumindest ein Umlenkmittel umfasst, das dazu vorgesehen ist, eine Erstreckungsrichtung des Haltemittels auszubilden, so dass die Verstelleinrichtung durch kompakte Abmessungen überzeugt. Die Verwendung von einem oder mehreren Umlenkmitteln bietet eine optimale Führung des Haltemittels ausgehend vom Anlenkpunkt der Verstelleinrichtung zur Niederhaltereinrichtung hin. Die Umlenkung und/oder Führung des Haltemittels kann durch die konstruktive Anordnung des Umlenkmittels derart ausgestaltet sein, dass Kollisionen unterschiedlicher Bauteile mit dem Haltemittel bei den unterschiedlichen Höhen- und/oder Verstellbewegungen des Zinkenrotors und/oder der Niederhaltereinrichtung ausgeschlossen werden. Es können dabei ein einzelnes Umlenkmittel oder auch mehrere Umlenkmittel vorgesehen sein.

Als Umlenkmittel kann im Prinzip jede Art von Umlenkmittel verwendet werden, welches eine geeignete Umlenkung und/oder Führung des Haltemittels ermöglicht. Das Umlenkmittel kann insbesondere eine Führungsfläche aufweisen, an die sich das Haltemittel zumindest bereichsweise anlegen kann und/oder an der das Haltemittel abrollen und/oder abgleiten kann. Geeignete Umlenkmittel bilden beispielsweise Beschläge, Bügel und/oder Rollen.

Die Einstellung der Mindest-Arbeitshöhe kann auf verschiedene Weise durchgeführt sein. Bevorzugt ist der Niederhalteraktor dazu eingerichtet, die Niederhaltereinrichtung über ein Haltemittel relativ zum Anlenkpunkt heraufzuziehen und/oder herabzulassen. Prinzipiell kann das Auf- und/oder Ablassen der Niederhaltereinrichtung mit dem Niederhalteraktor auf verschiedene Art und Weise realisiert sein. Zum Beispiel kann der Niederhalteraktor direkt oder indirekt am Haltemittel angreifen. Insbesondere kann die Verstelleinrichtung unterschiedliche Mittel aufweisen, durch die der Niederhalteraktor mit dem Haltemittel zusammenwirkt. Außerdem sind verschiedene Verstellmechanismen durch den Niederhalteraktor realisierbar. So kann der Niederhalteraktor vorteilhaft durch eine flaschenzugähnliche Führung des Haltemittels auf die Niederhaltereinrichtung einwirken. Auch kann der Niederhalteraktor mit einer Spule zusammenwirken, auf welcher das Haltemittel aufgewickelt ist, um die Arbeitshöhe mittels des Haltemittels einzustellen.

Nach einer vorteilhaften Ausgestaltung kann die Arbeitshöheneinstellung insbesondere auch durch ein Verstellen des Umlenkmittels der Verstelleinrichtung erfolgen. In einer besonders bevorzugten Ausführungsform umfasst die Verstelleinrichtung ein erstes Umlenkmittel, welches mittels des Niederhalteraktors in Bezug auf den Anlenkpunkt des Haltemittels und/oder die Niederhaltereinrichtung verstellbar ist. Dabei kann das erste Umlenkmittel insbesondere am Niederhalteraktor angeordnet und/oder ihm zugeordnet sein. Es kann insbesondere auch von dem Niederhalteraktor umfasst sein. Das erste Umlenkmittel kann daher auch als ein Teil des Niederhalteraktors angesehen werden. Das Verstellen des ersten Umlenkmittels geht mit einer Änderung der Distanz zwischen Niederhaltereinrichtung und Anlenkpunkt einher.

In einer vorteilhaften Ausgestaltung kann durch Verstellen des ersten Umlenkmittels vom Anlenkpunkt weg die Niederhaltereinrichtung abgelassen werden, sodass die Arbeitshöhe reduziert ist. Weiterhin kann durch Verstellen des ersten Umlenkmittels zum Anlenkpunkt hin, die Niederhaltereinrichtung angehoben werden, sodass die Arbeitshöhe erhöht ist. Insgesamt kann somit dadurch die Niederhaltereinrichtung auf- und/oder abgelassen werden.

In vorteilhafter Ausgestaltung kann das erste Umlenkmittel so ausgestaltet sein, dass das Haltemittel an diesem abwälzen, abrollen und/oder abgleiten kann. In dieser Ausführung kann das Haltemittel zumindest bereichsweise das erste Umlenkmittel umschlingen. Auch kann das erste Umlenkmittel drehbar gelagert sein. Dabei kann das erste Umlenkmittel beispielsweise als eine Umlenkrolle oder als ein Kettenrad ausgebildet sein.

In einer vorteilhaften Ausgestaltung umfasst die Verstelleinrichtung ein zweites Umlenkmittel. Dabei kann das zweite Umlenkmittel ortsfest in Bezug auf den Hauptrahmen an diesem angeordnet sein, während der Anlenkpunkt des Haltemittels der Verstelleinrichtung in Bezug auf den Hauptrahmen verstellbar ist. Die Arbeitshöheneinstellung der Niederhaltereinrichtung erfolgt bei dieser Ausprägung auch durch Verstellung der Niederhaltereinrichtung in Bezug auf das zweite Umlenkmittel. Die Arbeitshöheneinstellung ist allerdings nicht auf ein solches ortsfestes zweites Umlenkmittel eingeschränkt.

Nach einer besonders vorteilhaften Ausgestaltung kann das zweite Umlenkmittel zumindest um einen Freiheitsgrad bezüglich des Hauptrahmens verstellbar zu diesem ausgebildet sein. Es wird daher eine besonders bevorzugte Ausführungsform vorgeschlagen, wonach die Verstelleinrichtung ein zweites Umlenkmittel aufweist, welches um eine in Bezug auf den Hauptrahmen ortsfest angeordneten Drehachse drehbar gelagert ist. Das zweite Umlenkmittel stellt durch die ortsfeste Drehachse einen Fixpunkt am Hauptrahmen dar.

So ist das Haltemittel in einen ersten Abschnitt, welcher sich ausgehend vom Anlenkpunkt zum ersten Umlenkmittel erstreckt und einen zweiten Abschnitt, welcher sich ausgehend vom ersten Umlenkmittel um das zweite Umlenkmittel zur Niederhaltereinrichtung erstreckt, unterteilt. Da das zweite Umlenkmittel am Hauptrahmen gelagert ist, entsteht bei einer Drehung des zweiten Umlenkmittels um die ortsfeste Drehachse eine Änderung der Arbeitshöhe der Niederhaltereinrichtung. Dabei kann es auf unterschiedliche Art und Weise mit dem Haltemittel zusammenwirken. So kann das zweite Umlenkmittel eine exzentrische Kontur zum Zusammenwirken mit dem Haltemittel aufweisen. Dabei kann das Haltemittel zumindest bereichsweise um die exzentrische Kontur umwickelt sein und/oder beim Verstellen der Arbeitshöhe an dieser entlanggleiten.

Es ist bevorzugt, dass das zweite Umlenkmittel eine zur Drehachse exzentrisch ausgebildete Kontur aufweist, um die das Haltemittel zumindest bereichsweise angelegt und/oder umwickelt ist. Diese exzentrische Kontur wirkt je nach Drehstellung des zweiten Umlenkmittels unterschiedlich mit dem Haltemittel zusammen. Dabei bewirkt die exzentrische Kontur, dass das Haltemittel beim Verdrehen des zweiten Umlenkmittels eine Veränderung der Arbeitshöhe der Niederhaltereinrichtung einleitet.

Die vorstehend beschriebene Verstellmöglichkeit kann gemäß einer vorteilhaften Ausgestaltung dazu genutzt werden, die Arbeitshöhe automatisch anzupassen. In dieser Ausführungsform ist es bevorzugt, dass die Drehung des zweiten Umlenkmittels um die ortsfeste Drehachse mechanisch gekoppelt an die Höhenbeweglichkeit des Zinkenrotors der Pickup relativ zum Hauptrahmen ist. Die mechanische Kopplung sorgt dafür, dass die Arbeitshöhenverstellung über das zweite Umlenkmittel automatisch mit der Bodenführung des Zinkenrotors der Pickup einhergeht. Die Bodenführungen des Zinkenrotors haben somit einen direkten Einfluss auf die Niederhaltereinrichtung. Die Niederhaltereinrichtung wird folglich zumindest annähernd konstant in der einstellbaren Mindest-Arbeitshöhe über den Boden gehalten, wobei hierfür in geschickter Art und Weise die Bodenführung des Zinkenrotors der Pickup ausgenutzt wird. Vorteilhaft kann dieses Merkmal des selbsttätigen Haltens der Arbeitshöhe der Niederhaltereinrichtung für eine Vielzahl von Pickups auch nachgerüstet werden.

Von großem Vorteil ist weiterhin, dass die zuvor beschriebene Einstellung der Mindest-Arbeitshöhe mittels des Niederhalteraktors sich nicht auf die Verdrehung des zweiten Umlenkmittels auswirkt. Die jeweiligen Verstellmechanismen beeinflussen sich daher nicht gegenseitig, sodass die Verstelleinrichtung insgesamt weniger störanfällig ist

Bevorzugt ist, dass die Verstelleinrichtung eine Hebelanordnung aufweist, welche dazu vorgesehen ist, den Zinkenrotor der Pickup gegenüber dem Hauptrahmen um eine Pickup-Schwenkachse höhenbeweglich zu verschwenken. Die Pickup-Schwenkachse ist dabei vorzugsweise ortsfest bezüglich des Hauptrahmens an diesem angeordnet. Die Hebelanordnung dient dazu den Zinkenrotor beim Verschwenken um die Schwenkachse zu führen. Dabei kann der Zinkenrotor auch insbesondere über zuvor erwähnte Tastmittel über dem Boden abgestützt und geführt sein. Die Hebelanordnung kann ein oder mehrere verschwenkbare und/oder verschiebbare Hebel und/oder Lenker unterschiedlicher Ausgestaltung umfassen, um diesen Zweck zu erfüllen.

Die Hebelanordnung ist dabei nicht zwangsläufig direkt an den Zinkenrotor der Pickup angelenkt. Die Pickup kann insbesondere einen Pickup-Rahmen aufweisen, an dem die Hebelanordnung angelenkt ist und welcher den Zinkenrotor drehbar gelagert aufnimmt. Beispielsweise kann dies über einen Lenker geschehen, der sich von der Hebelanordnung zum Pickup-Rahmen erstreckt. Somit umfasst die Hebelanordnung neben dem zweiten Umlenkmittel einen Hebel für den Lenker zum Pickup-Rahmen sowie einen weiteren Hebel für den Pickupaktor, wobei diese ortsfest zueinander angebracht sind.

Bevorzugt kann die Niederhaltereinrichtung verschwenkbar in Bezug auf den Zinkenrotor und/oder den Hauptrahmen gelagert sein. Dabei ist es besonders vorteilhaft, dass die Niederhaltereinrichtung mindestens einen Niederhalter-Schwenkarm umfasst, mit welchem sie an einer Niederhalter-Schwenkachse schwenkbar an dem Pickup-Rahmen angelenkt ist. Die Niederhalter-Schwenkachse ist vorzugsweise in Bezug auf den Zinkenrotor ortsfest angeordnet. Sie erstreckt sich vorzugsweise in die Querrichtung. Da die Niederhalter-Schwenkachse ortsfest zum Zinkenrotor angeordnet ist, kann die Mindest-Arbeitshöhe unabhängig vom Zinkenrotor eingestellt werden. Der Zinkenrotor der Pickup kann demnach in einer bodennahen Stellung über den Boden geführt werden, wobei die Niederhaltereinrichtung weiterhin um die Pickup-Schwenkachse verschwenkt werden und dabei sowohl einen zumindest annähernd konstant bleibenden Abstand zum Zinkenrotor als auch zum Boden aufweisen kann.

Bevorzugt ist, dass die Verstelleinrichtung einen Pickupaktor umfasst, der dazu vorgesehen ist, den Zinkenrotor der Pickup relativ zum Hauptrahmen zu verschwenken. Das Verschwenken mittels des Pickupaktors kann insbesondere für die Überführung in die Transportposition genutzt werden. Der Pickupaktor greift bevorzugt an der Hebelanordnung der Verstelleinrichtung an, um den Zinkenrotor der Pickup relativ zum Hauptrahmen zu verschwenken. Der Pickupaktor kann mit einem ersten Ende am Hauptrahmen und mit einem zweiten Ende an der Hebelanordnung angelenkt sein.

Nach einer weiteren vorteilhaften Ausgestaltung ist der Niederhalteraktor am Pickupaktor befestigt und mittels des Pickupaktors relativ zum Hauptrahmen verstellbar. Eine Betätigung des Pickupaktors bewegt bei dieser Ausgestaltung auch den Niederhalteraktor. Somit verstellt sich auch das Haltemittel in Abhängigkeit von einer Bewegung des Pickupaktors. Dies erlaubt, dass der Pickupaktor für das Verstellen des Zinkenrotors der Pickup verwendet werden kann und die Niederhaltereinrichtung dabei den Bewegungen des Zinkenrotors der Pickup folgt.

Weiterhin bevorzugt ist, dass der Niederhalteraktor entlang einer mit dem Pickupaktor verbundenen Längsführung verfahrbar ist. Dies dient dazu, das Haltemittel (ohne Durchhang oder Spiel) möglichst effektiv einzustellen.

Vorzugsweise ist der Pickupaktor für einen Feldbetriebsmodus kraftlos einstellbar. Dadurch übt er im Feldbetriebsmodus keine Kraft auf den Zinkenrotor der Pickup aus. Somit ist der Zinkenrotor der Pickup im Feldbetriebsmodus frei verschwenkbar gelagert und kann optimal den jeweiligen Bodenkonturen folgen. Folglich ist auch die Hebelanordnung der Verstelleinrichtung frei drehbar gelagert und die Niederhaltereinrichtung kann ohne eine Einwirkung durch den Pickupaktor den Höhenbewegungen des Zinkenrotors der Pickup folgen.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: schematisch einen perspektivischen Ausschnitt einer Pickup einer Erntemaschine gemäß der Erfindung;
- Fig. 1a: eine vergrößerte Darstellung der Einzelheit X aus Fig. 1;
- Fig. 2: schematisch eine Schnittansicht des vorderen Bereichs der Erntemaschine der Fig. 1, wobei in (a) und (b) verschiedene Positionen eines Zinkenrotors und einer Niederhaltereinrichtung der Pickup in Bezug zum Rahmen der Erntemaschine dargestellt sind.

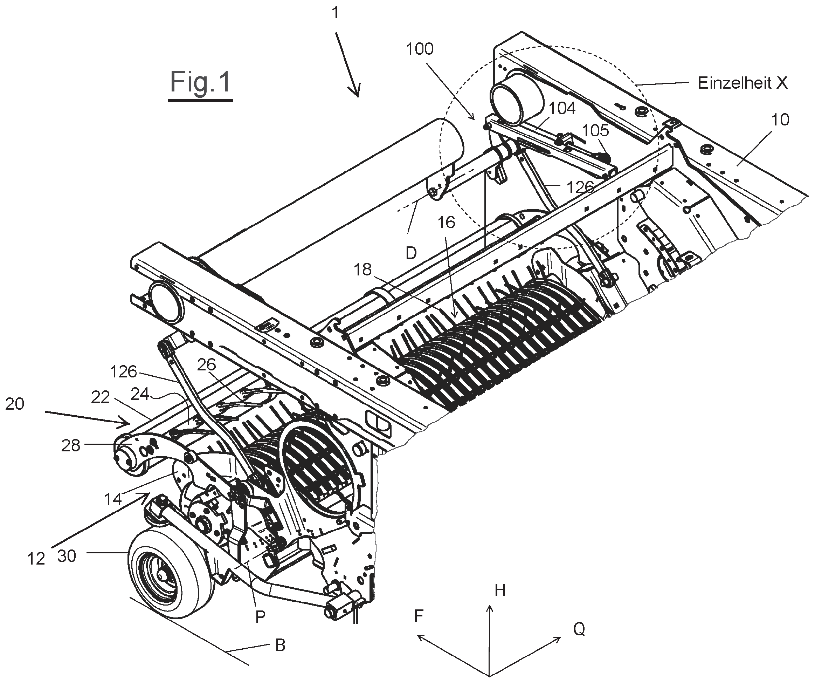

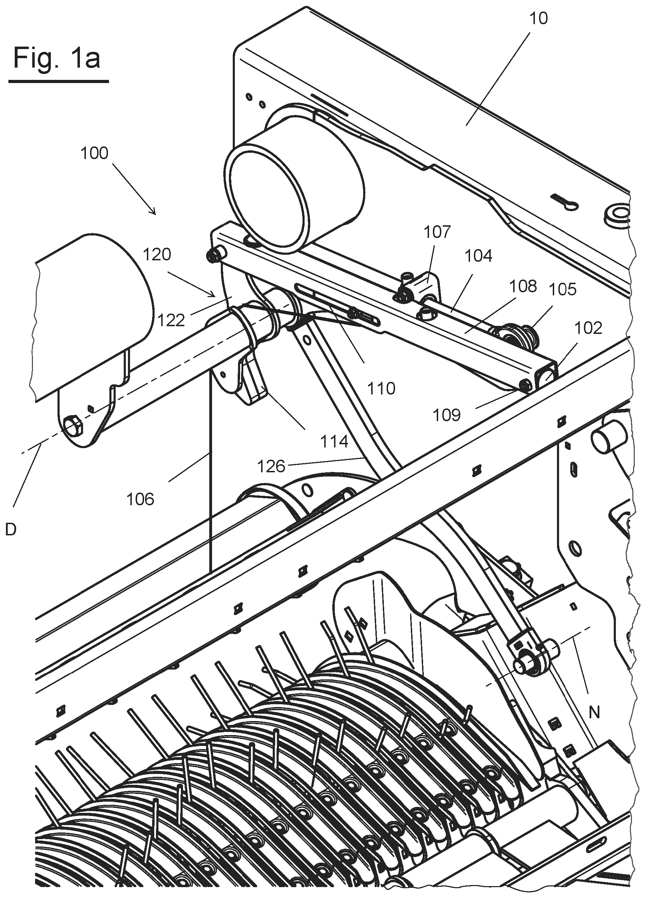

Fig. 1 zeigt in einer perspektivischen Ansicht einen Ansatz einer landwirtschaftlichen Erntemaschine 1. Die Erntemaschine 1 umfasst einen Hauptrahmen 10 und ein Aufnahmeorgan in der Art einer Pickup 12. In der Fig. 1a ist eine Einzelheit X der Erntemaschine 1 in einer vergrößerten Ansicht wiedergegeben.

Die Pickup 12 weist einen Pickup-Rahmen 14 und einen Zinkenrotor 16 auf. Der Zinkenrotor 16 ist am Pickup-Rahmen 14 gelagert und ist rotierend antreibbar. Der Zinkenrotor 16 ist dazu vorgesehen, auf dem Boden B liegendes Erntegut aufzusammeln. Für diesen Zweck weist er umfangsseitig angeordnete und radial nach außen ragende Aufnahmezinken 18 auf.

In einem Feldbetriebsmodus rotiert der Zinkenrotor 16, während die Erntemaschine 1 in eine Fahrtrichtung F fortbewegt wird. Dabei werden die Aufnahmezinken 18 nahe über dem Boden B geführt, um das Erntegut aufzunehmen und in Richtung weiterer nicht näher dargestellten und der Pickup 12 nachgeordneten Förder- und/oder Bearbeitungseinrichtungen zu fördern. Damit das Erntegut nicht unkontrolliert hochgeschleudert sondern in Richtung der Förder- und/oder Bearbeitungseinrichtungen geführt wird, weist die Pickup 12 eine Niederhaltereinrichtung 20 auf.

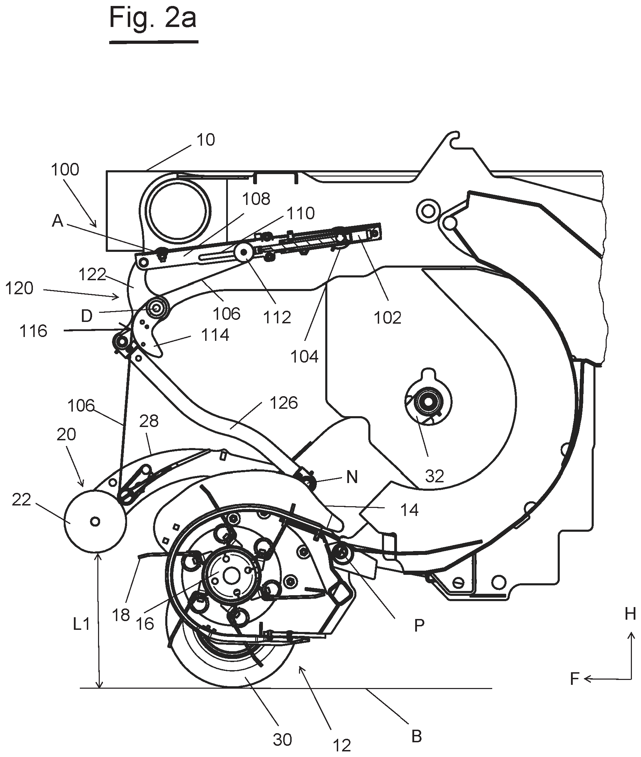

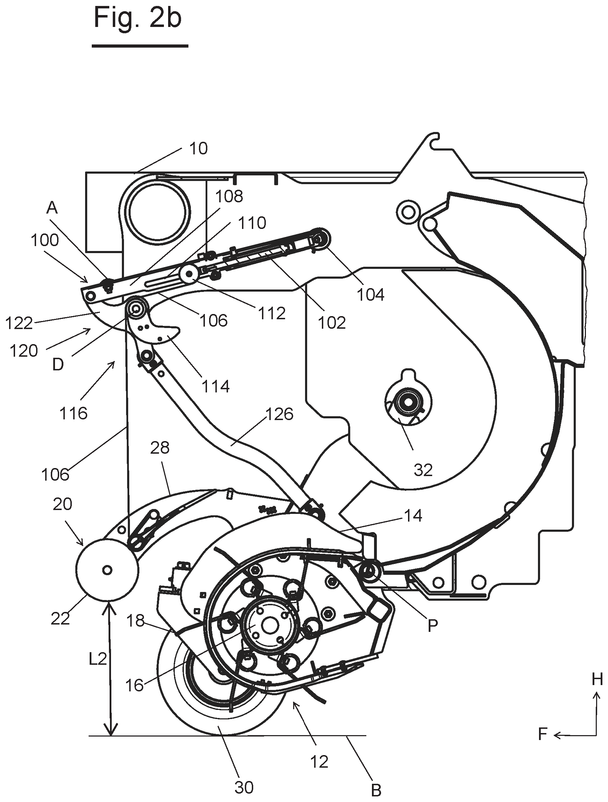

Die Niederhaltereinrichtung 20 ist dazu vorgesehen, das aufgenommene Erntegut in einem Wirkbereich der Aufnahmezinken 18 des Zinkenrotors 16 zu halten. Sie weist eine Niederhalterrolle 22 auf. Die Niederhalterrolle 22 ist dem Zinkenrotor 16 in einer Fahrtrichtung F vorgeordnet und in einer Hochrichtung H etwa oberhalb von dem Zinkenrotor 16 angeordnet (siehe Fig. 2). Sie erstreckt sich, so wie der Zinkenrotor 16 in eine Querrichtung Q, quer zur Fahrtrichtung F.

Stromabwärts der Niederhalterrolle 22 weist die Niederhaltereinrichtung 20 Niederhalterzinken 26 auf, die ebenfalls der Erntegutführung dienen und an einem sich quer zur Fahrtrichtung F erstreckenden Trägerelement 24 angeordnet sind.

Der Zinkenrotor 16 ist zur Höhenanpassung gegenüber dem Boden B höhenbeweglich am Hauptrahmen 10 angeordnet. Speziell weist die Pickup 12 zwei Pickup-Schwenkarme 32 (siehe Fig. 2a oder Fig. 2b) auf. Die Pickup-Schwenkarme 32 verbinden den Pickup-Rahmen 14 mit dem Hauptrahmen 10. Mittels der Pickup-Schwenkarme 32 ist der Zinkenrotor 16 um eine Pickup-Schwenkachse P in Bezug auf den Boden B und/oder den Hauptrahmen 10 verschwenkbar. Die Pickup-Schwenkachse P ist ortsfest in Bezug auf den Hauptrahmen 10 angeordnet.

Im Feldbetriebsmodus stützt sich die Pickup 12 zumindest teilweise mittels Tasträder 30 gegenüber dem Boden B ab. Die Tasträder 30 dienen auch einer Bodenführung des Zinkenrotors 16. Der Zinkenrotor 16 wird im Feldbetriebsmodus beim Überfahren von Bodenkonturen automatisch gegenüber dem Hauptrahmen 10 verschwenkt. Dadurch ist im Feldbetriebsmodus ein Abstand des Zinkenrotors 16 zum Boden B im Wesentlichen konstant.

Die Erntemaschine 1 weist zudem eine Verstelleinrichtung 100 auf, die dazu eingerichtet ist, den Zinkenrotor 16 um die Pickup-Schwenkachse P zu verschwenken. Hierfür umfasst die Verstelleinrichtung 100 einen Pickupaktor 104. Die Verstelleinrichtung 100 umfasst weiterhin eine Hebelanordnung 120. Die Hebelanordnung 120 verbindet den Pickupaktor 104 mit der Pickup 12.

Der Pickupaktor 104 ist einerseits am Hauptrahmen 10 (Fig. 1a) angelenkt und andererseits an einem Hebel 122 der Hebelanordnung 120. Bei der Betätigung des Pickupaktors 104 wird der Hebel 122 um eine Drehachse D verschwenkt. Hierbei verstellt der Hebel 122 einen Lenker 126, der an der Pickup 12 angreift, um diese um die Pickup-Schwenkachse P zu verschwenken. Der Lenker 126 ist hier am Pickup-Rahmen 14 angelenkt. Speziell ist der Lenker 126 an einer Niederhalter-Schwenkachse N angelenkt.

Wie weiterhin aus der Fig. 1a ersichtlich ist, ist der Pickupaktor 104 über einen Lagerbolzen 105 am Hauptrahmen 10 der Erntemaschine 1 gelagert. Über die Halterung 107 ist mit dem Pickupaktor 104 eine U-förmige Halterung 108 fest verbunden. Mittels der Schraubverbindung 109 ist somit der Niederhalteraktor 102 innerhalb der U-förmigen Halterung 108 aufgenommen und geführt. Als weitere Führung des Niederhalteraktors 102 ist eine Langlochführung 110 in der U-förmigen Halterung 108 vorgesehen. Somit ist erkennbar, dass eine Längenveränderung des Pickupaktors 104 immer mit einer Bewegung des Niederhalteraktors 102 in Bezug zum Hauptrahmen 10 einhergeht. Pickupaktor 104 und Niederhalteraktor 102 sind hier jeweils als Zylinder ausgebildet. Statt zwei Aktoren 102, 104 ist es auch möglich, einen einzelnen Aktor mit zwei Kolbenstangen zu verwenden, welche unabhängig voneinander betätigbar sind.

Im Feldbetriebsmodus ist der Pickup-Aktor 104 kraftlos geschaltet. Das heißt, dieser übt keine Kraft auf den Zinkenrotor 16 der Pickup 12 aus, sodass dieser frei um die Pickup-Schwenkachse P schwenken kann. Entsprechend wird der Zinkenrotor 16 beim Überfahren von Bodenkonturen mittels der Tasträder 30 um die Pickup-Schwenkachse P in Hochrichtung H herauf- und/oder herab geschwenkt.

Die Hebelanordnung 120 (siehe Fig. 2a und 2b) greift mit dem Lenker 126 an der Pickup 12 an. Bei einer Verschwenkung des Zinkenrotors 16 wird dadurch der Hebel 122 automatisch um die Drehachse D verschwenkt. Da der Pickupaktor 104 im Feldbetriebsmodus kraftlos ist, wird er im Feldbetriebsmodus automatisch in Abhängigkeit von einer Höhenposition des Zinkenrotors 16 ein- und/oder ausgefahren. Die Höhenposition des Zinkenrotors 16 bezieht sich dabei auf den Boden und/oder den Hauptrahmen 10. Sie ergibt sich aus den verschiedenen Positionen des Zinkenrotors 16, die er durch Verschwenken um die Pickup-Schwenkachse P annehmen kann.

Die Niederhaltereinrichtung 20 ist schwenkbar am Pickup-Rahmen 14 um die Niederhalter-Schwenkachse N höhenbeweglich angelenkt. Beim Verschwenken des Zinkenrotors 16 der Pickup 12 wird daher auch die Niederhaltereinrichtung 20 um die Pickup-Schwenkachse P verschwenkt. Zur Anbindung an den Pickup-Rahmen 14 weist die Niederhaltereinrichtung 20 beidseitig jeweils einen Niederhalter-Schwenkarm 28 auf, der an der Niederhalter-Achse N frei schwenkbar gelagert ist.

Zudem ist die Niederhaltereinrichtung 20 mittels eines Haltemittels 106 an einem Anlenkpunkt A der Verstelleinrichtung 100 oberhalb der Niederhaltereinrichtung 20 aufgehängt. Das Haltemittel 106 ist ein flexibles Band. Dieses erlaubt, dass sich die Niederhaltereinrichtung 20 und insbesondere die Niederhalterrolle 22 automatisch an unterschiedliche Erntegutmengen anpassen kann. Wenn eine höhere Erntegutschicht auf dem Boden B vorhanden ist, wird die Niederhalterrolle 22 automatisch angehoben, da das Haltemittel 106 aufgrund seiner Flexibilität dem Erntegut nachgibt.

Die Verstelleinrichtung 100 hat neben der Verstellung des Zinkenrotors 16 noch eine weitere Funktion. So ist die Verstelleinrichtung 100 auch dazu vorgesehen, eine Arbeitshöhe L1, L2 der Niederhaltereinrichtung 20 einzustellen, sowie die eingestellte Arbeitshöhe L1, L2 beim Überfahren von Bodenkonturen zumindest annähernd konstant zu halten.

Die Verstelleinrichtung 100 umfasst einen Niederhalteraktor 102 zur Verstellung des Haltemittels 106. Der Niederhalteraktor 102 ist dazu eingerichtet, mittels des Haltemittels 106 die Mindest-Arbeitshöhe L1, L2 der Niederhaltereinrichtung 20 einzustellen. Man kann auch sagen, die Niederhaltereinrichtung 20 stellt eine Arbeitshöhe L1, L2 ein, die aufgrund der Flexibilität des Haltemittels 106 nach oben hin nicht eingeschränkt ist. Im Prinzip handelt es sich daher bei der eingestellten Arbeitshöhe L1, L2 um eine Mindest-Arbeitshöhe L1, L2 oder ein Mindestmaß für die Arbeitshöhe L1, L2. Die Begriffe "Arbeitshöhe" und "Mindest-Arbeitshöhe" werden in Bezug auf die Niederhaltereinrichtung 20 daher synonym verwendet. Die Arbeitshöhe L1, L2 wird eingestellt, indem die Niederhaltereinrichtung 20 mittels des Haltemittels 106 in Bezug auf den Hauptrahmen 10 heraufgezogen und/oder herabgelassen wird.

Da der Zinkenrotor 16 und die Niederhaltereinrichtung 20 unterschiedliche Schwenkachsen N, P aufweisen, würde sich herkömmlicherweise die Arbeitshöhe L1, L2 beim Überfahren von Bodenkonturen verändern. Dass die eingestellte Mindest-Arbeitshöhe L1, L2 der Niederhaltereinrichtung 20 auch beim Überfahren von Bodenkonturen im Wesentlichen gleichbleibend ist, ist in der dargestellten Ausführungsform einer Anordnung des Anlenkpunktes A für das Haltemittel 106 und einer damit zusammenwirkenden Führung des Haltemittels 106 durch zwei Umlenkmittel 112, 114 realisiert.

Die Umlenkmittel 112, 114 sind zur Umlenkung und/oder Führung des Haltemittels 106 vorgesehen. Durch die Umlenkung ändert sich eine Erstreckungsrichtung des Haltemittels 106, ausgehend vom Anlenkpunkt A in Richtung der Niederhaltereinrichtung 20. Beide Umlenkmittel 112, 114 sind in Bezug auf den Hauptrahmen 10 verstellbar und ermöglichen so eine Verstellung des Haltemittels 106 in Bezug auf den Hauptrahmen 10.

Ein erstes Umlenkmittel 112 ist am Niederhalteraktor 102 angeordnet. Es ist als eine Umlenkrolle ausgebildet. Das erste Umlenkmittel 112 ist mittels des Niederhalteraktors 102 verstellbar. Es ist hier an einem Ende einer Kolbenstange des Niederhalteraktors 102 angeordnet. Mittels des ersten Umlenkmittels 112 kann der Niederhalteraktor 102 am Haltemittel 106 in der Art eines Flaschenzuges angreifen und dieses verstellen. In einem ausgefahrenen Zustand des Niederhalteraktors 102 ist das erste Umlenkmittel 112 näher am Anlenkpunkt A angeordnet als in einem eingefahrenen Zustand. Durch Ein- und/oder Ausfahren des Niederhalteraktors 102 ändert sich demnach eine Länge eines Abschnitts des Haltemittels 106, der sich zwischen dem Anlenkpunkt A und dem ersten Umlenkmittel 112 sowie zwischen dem ersten Umlenkmittel 112 und der Niederhaltereinrichtung 20 erstreckt. Eine Änderung der Arbeitshöhe L1, L2 wird damit eingeleitet. Folglich kann durch Betätigen des Niederhalteraktors 102 die Mindest-Arbeitshöhe L1, L2 eingestellt werden. Der Niederhalteraktor 102 ist dazu eingerichtet, verschiedene Stellungen zwischen dem ein- und ausgefahrenen Zustand anzunehmen, sodass die Mindest-Arbeitshöhe L1, L2 stufenlos eingestellt werden kann.

Ein zweites Umlenkmittel 114 ist dabei an einer Drehachse D angeordnet, die ortsfest in Bezug auf den Hauptrahmen 10 ist. Das Haltemittel 106 ist zumindest bereichsweise an eine exzentrische Kontur 116 des zweiten Umlenkmittels 114 angelegt und umschlingt die exzentrische Kontur 116 dabei zumindest teilweise. An der exzentrischen Kontur 116 kann das Haltemittel 106 abwälzen und/oder abgleiten. Durch die exzentrische Kontur 116 ist eine Umschlingung des Haltemittels 106 um das zweite Umlenkmittel 114 veränderbar. Dadurch ändert sich eine Länge des Abschnitts des Haltemittels 106, das sich vor und/oder nach dem zweiten Umlenkmittel 114 erstreckt. Durch die ortsfeste Drehachse D ist das zweite Umlenkmittel 114 nicht verschiebbar gegenüber dem Hauptrahmen 10 gelagert. Ändert sich die Länge des nach dem zweiten Umlenkmittels 114 erstreckenden Abschnitts des Haltemittels 106, so ändert sich folglich auch eine Distanz zwischen zweiten Umlenkmittel 114 und Niederhaltereinrichtung 20. Damit geht eine Änderung der Arbeitshöhe L1, L2 der Niederhaltereinrichtung 20 gegenüber dem Boden B einher. Somit ist durch ein Verdrehen des zweiten Umlenkmittels 114 der Verstelleinrichtung 100 um die Drehachse D daher die Arbeitshöhe L1, L2 veränderbar, ohne dass eine durch den Niederhalteraktor 102 eingeleitete Veränderung der Mindest-Arbeitshöhe erfolgt.

Der Anlenkpunkt A für das Haltemittel 106 ist ferner ortsfest zu einem zylinderseitigen Ende des Pickup-Aktors 104 (siehe dazu auch Fig. 1a) angeordnet. Beim Verfahren des Pickup-Aktors 104 wird der Anlenkpunkt A somit automatisch mitverstellt. Da der Pickup-Aktor 104 im Feldbetriebsmodus in Abhängigkeit von der Höhenposition des Zinkenrotors 16 automatisch verstellt wird, wird auch der Anlenkpunkt A in Abhängigkeit von der Höhenposition des Zinkenrotors 16 automatisch verstellt. Vorteilhaft kann dies für den Feldbetriebsmodus genutzt werden, wie nachstehend näher erläutert wird.

Fig. 2 zeigt in (a) und (b) jeweils einen Ausschnitt der Erntemaschine 1 der Fig. 1 in einer seitlichen Schnittansicht. Die Bezugszeichen werden im Einzelnen nicht wiederholt erläutert, da sie im Wesentlichen bereits in Bezug auf Fig. 1 erläutert wurden.

Die Fig. 2 in (a) und (b) unterscheiden sich voneinander darin, dass jeweils der Zinkenrotor 16 der Pickup 12 in verschiedenen Höhenpositionen in Bezug zum Rahmen 10 der Erntemaschine 1 angeordnet ist, um die Funktionsweise der Verstelleinrichtung 100 besser zu verdeutlichen.

Fig. 2a zeigt den Zinkenrotor 16 in einer gegenüber der Horizontalen hochgeschwenkten Höhenposition. Gleichzeitig ist die Niederhaltereinrichtung 20 in einer abgesenkten Arbeitsposition dargestellt. In dieser Arbeitsposition weist die Niederhaltereinrichtung 20 eine erste Arbeitshöhe L1 auf. Der Pickupaktor 104 befindet sich im ausgefahrenen Zustand.

Im Feldbetriebsmodus ist der Pickupaktor 104 wie bereits erwähnt kraftlos geschaltet. Entsprechend wird der Zinkenrotor 16 der Pickup 12 beim Überfahren von Bodenwellen mittels der Tasträder 30 um die Pickup-Schwenkachse P schwenkend herauf- und/oder herab bewegt. Da die Niederhaltereinrichtung 20 und der Zinkenrotor 16 unterschiedliche Schwenkachsen N, P aufweisen, ergibt sich grundsätzlich ein Versatz der Arbeitshöhe L1, L2 bei unterschiedlichen Höhenpositionen des Zinkenrotors 16. Die Verstelleinrichtung 100 ist dazu eingerichtet, diesen Versatz auszugleichen.

In Fig. 2b ist der Zinkenrotor 16 in einer abgesenkten, etwa horizontalen Höhenposition dargestellt. In dieser Höhenposition durchfahren die Tasträder 30 etwa eine Bodensenke, sodass der Zinkenrotor 16 gegenüber Fig. 2a um die Pickup-Schwenkachse P in Hochrichtung H nach unten verschwenkt ist.

Durch die Verschwenkung des Zinkenrotors 16 wird über den Lenker 126 der Hebel 122 selbsttätig in Abhängigkeit von der Höhenposition um die Drehachse D verschwenkt. Mit dem Hebel 122 wird auch das zweite Umlenkmittel 114 um die Drehachse D gedreht. Aufgrund der exzentrische Kontur 116 weist das Haltemittel 106 nun in der in Fig. 2b dargestellten Höhenposition des Zinkenrotors 16 eine andere Umschlingung um das zweite Umlenkmittel 114 auf als in der in Fig. 2a dargestellten Höhenposition des Zinkenrotors 16. Da die Niederhaltereinrichtung 20 und der Zinkenrotor 16 der Pickup 12 unterschiedliche Schwenkachsen N, P aufweisen, würden sich grundsätzlich ein Versatz der Arbeitshöhe L1 nach Fig. 2a und der Arbeitshöhe L2 nach Fig. 2b ergeben. Durch die vorteilhafte Gestaltung der exzentrische Kontur 116, sowie durch das Zusammenwirken der Verstelleinrichtung 100 mit dem Zinkenrotor 16 der Pickup 12 wird nach der Erfindung vorteilhaft erreicht, die Arbeitshöhe L1, L2 zumindest annähernd konstant zu halten und stets optimale Aufnahme- und Fördereigenschaften der Pickup 12 sicher zu stellen.

## Patentansprüche

1. Landwirtschaftliche Erntemaschine (1) mit einem Hauptrahmen (10) und mit einer schwenkbar am Hauptrahmen (10) angelenkten Pickup (12), welche einen rotierend antreibbaren Zinkenrotor (16) mit Aufnahmezinken (18) zum Aufnehmen von auf einem Boden (B) befindlichem Erntegut umfasst, mit einer dem Zinkenrotor (16) zugeordneten Niederhaltereinrichtung (20), welche zusammen mit dem Zinkenrotor (16) einen Erntegutkanal zur Weitergabe des aufgenommenen Erntegutes an nachfolgende Förderaggregate ausbildet, sowie mit einer Verstelleinrichtung (100) zur höhenbeweglichen Verstellung des Zinkenrotors (16) relativ zum Hauptrahmen (10),
**dadurch gekennzeichnet, dass** die Verstelleinrichtung (100) weiterhin dazu eingerichtet ist, eine Mindest-Arbeitshöhe (L1, L2) der Niederhaltereinrichtung (20) in Bezug zum Boden (B) einzustellen und diese eingestellte Mindest-Arbeitshöhe (L1, L2) unabhängig von einer Höhenposition des Zinkenrotors (16) der Pickup (12) in Bezug auf den Hauptrahmen (10) zumindest annähernd konstant zu halten.

2. Landwirtschaftliche Erntemaschine (1) nach Anspruch 1, **dadurch gekennzeichnet, dass** die Verstelleinrichtung (100) einen Niederhalteraktor (102) und einen Pickupaktor (104) umfasst, wobei der Niederhalteraktor (102) und der Pickupaktor (104) über eine Hebelanordnung (120) miteinander gekoppelt sind.

3. Landwirtschaftliche Erntemaschine (1) nach Anspruch 1 oder 2, **dadurch gekennzeichnet, dass** die Hebelanordnung (120) an einer ortsfest am Rahmen (10) angeordneten Drehachse (D) schwenkbar gelagert ist.

4. Landwirtschaftliche Erntemaschine (1) nach zumindest einem der vorhergehenden Ansprüche, **dadurch gekennzeichnet, dass** die Hebelanordnung (120) einen ersten Hebel (122) zur Anlenkung an den Pickupaktor (104), einen zweiten Hebel (123) zur Einleitung einer Höhenverstellung des Zinkenrotors (16) der Pickup (12) sowie zumindest ein Umlenkmittel (114) zur Anpassung der Mindest-Arbeitshöhe (L1, L2) der Niederhaltereinrichtung (20) umfasst.

5. Landwirtschaftliche Erntemaschine (1) nach zumindest einem der vorhergehenden Ansprüche, **dadurch gekennzeichnet, dass** die Mindest-Arbeitshöhe (L1, L2) der Niederhaltereinrichtung (20) über ein flexibles Haltemittels (106) einstellbar ist.

6. Landwirtschaftliche Erntemaschine (1) nach zumindest einem der vorhergehenden Ansprüche, **dadurch gekennzeichnet, dass** das flexible Haltemittel (106) einenends an der Niederhaltereinrichtung (20) und anderenends an einem Anlenkpunkt (A) des Niederhalteraktors (102) angelenkt ist.

7. Landwirtschaftliche Erntemaschine (1) nach zumindest einem der vorhergehenden Ansprüche, **dadurch gekennzeichnet, dass** das flexible Haltemittel (106) einenends an der Niederhaltereinrichtung (20) und anderenends an einem Anlenkpunkt (A) des Niederhalteraktors (102) angelenkt ist, wobei durch eine Stellbewegung des Niederhalteraktors (102) eine Einstellung der Mindest-Arbeitshöhe (L1, L2) der Niederhaltereinrichtung (20) erreichbar ist.

8. Landwirtschaftliche Erntemaschine (1) nach zumindest einem der vorhergehenden Ansprüche, **dadurch gekennzeichnet, dass** das flexible Haltemittel (106) als Seil oder Gurt ausgeführt ist.

9. Landwirtschaftliche Erntemaschine (1) nach zumindest einem der vorhergehenden Ansprüche, **dadurch gekennzeichnet, dass** das zumindest eine Umlenkmittel (114) der Hebelanordnung (120) eine exzentrische Kontur (116) aufweist, die dazu eingerichtet ist, das flexible Haltemittel (106) bei einer Schwenkbewegung der Hebelanordnung (120) um die Drehachse (D) entlang der exzentrische Kontur (116) zu führen und somit bei einer Höhenverstellung der Pickup (12) die Mindest-Arbeitshöhe (L1, L2) der Niederhaltereinrichtung (20) zumindest annähernd konstant zu halten.

10. Landwirtschaftliche Erntemaschine (1) nach zumindest einem der vorhergehenden Ansprüche, **dadurch gekennzeichnet, dass** der Niederhalteraktor (102) an seinem freien Ende mit einem Umlenkmittel (112) bestückt ist, welche in Verbindung mit der exzentrischen Kontur (116) des Führungshebels (114) eine flaschenzugähnliche Übersetzung ausbildet.

11. Landwirtschaftliche Erntemaschine (1) nach einem der vorherigen Ansprüche, **dadurch gekennzeichnet, dass** die Verstelleinrichtung (100) über die Hebelanordnung (120) dazu eingerichtet ist, den Zinkenrotor (16) der Pickup (12) gegenüber dem Hauptrahmen (10) um eine Pickup-Schwenkachse (P) höhenbeweglich zu verschwenken.

12. Landwirtschaftliche Erntemaschine (1) nach einem der vorherigen Ansprüche, **dadurch gekennzeichnet, dass** die Niederhaltereinrichtung (20) mindestens einen Niederhalter-Schwenkarm (28) umfasst, mit welchem sie um eine Niederhalter-Schwenkachse (N) schwenkbar an der Pickup (12) angelenkt ist, wobei die Niederhalter-Schwenkachse (N) in Bezug auf den Zinkenrotor (16) ortsfest angeordnet ist.
